# EUROPEAN PATENT SPECIFICATION

(11) **EP 2 175 517 B1**
(45) Date of publication and mention of the grant of the patent: **22.04.2015**
(21) Application number: 08765239.2
(22) Date of filing: 06.06.2008
(51) Int. Cl.: H01M 14/00, H01L 31/04, H01G 9/20

(54) **DYE-SENSITIZED SOLAR CELL**
FARBSTOFFSENSIBILISIERTE SOLARZELLE
PILE SOLAIRE SENSIBILISÉE PAR UN COLORANT

(30) Priority: 25.07.2007 JP 2007193511
(43) Date of publication of application: 14.04.2010
(73) Proprietor: SOKEN CHEMICAL & ENGINEERING CO., LTD., Toshima-ku, Tokyo 171-8531 (JP)
(72) Inventor: OKAMOTO, Syuji, Sayama-shi Saitama 350-1320 (JP)
(74) Representative: de Bresser, Sara Jean
(86) International application number: PCT/JP2008/060426
(87) International publication number: WO 2009/013942

(56) References cited:
- EP-A1- 1 494 246
- WO-A1-2004/112184
- JP-A- 2001 007 366
- JP-A- 2003 251 733
- JP-A- 2005 223 038
- JP-A- 2006 172 743
- JP-A- 2007 227 087
- US-A1- 2006 076 051
- ROHAN SENADEERA ET AL: "Volatile solvent-free solid-state polymer-sensitized TiO2 solar cells with poly(3,4-ethylenedioxythiophene) as a hole-transporting medium", CHEMICAL COMMUNICATIONS, 10 March 2005 (2005-03-10), pages 2259-2261, XP55002026,
- SAITO YASUTERU ET AL: "Application of Organic Conducting Polymer for Solidification of Dye Sensitized solar Cell", KOBUNSHI, vol. 52, 1 May 2003 (2003-05-01), pages 330-330, XP055149162, Japan ISSN: 0454-1138

## Description

### TECHNICAL FIELD

The present invention relates to a dye-sensitized solar cell which is a photoelectric conversion element sensitized by the use of a dye such as a ruthenium complex.

### BACKGROUND ART

Solar cells which directly convert light into electricity can generate electrical energy without emitting CO₂, and has been paid attention as an electrical energy generation system exerting no evil influence such as global warming. At first, such solar cells are, for the most part, solar cells using single crystal of silicon or solar cells of metal semiconductor bonding type using amorphous silicon, but because their production cost is high, dye-sensitized solar cells whose material cost is low have been paid attention recently.

Dye-sensitized solar cells have a metal oxide having n-type semiconductor property, such as titania, in the anode electrode (electron take-out side), and in order to increase the light-receiving surface area, the n-type semiconductor is generally made to have a nanoporous shape. In the case of usual metal oxides alone, the wavelength region enabling excitation is present only in the short wavelength region, so that the metal oxides are usually loaded with metal complex dyes such as a ruthenium complex.

These dyes are substantially optically excited, and thereby, electric charge moves to the metal oxide that is the n-type semiconductor and subjected to electric charge separation. In order to inject electric charge into the dye that is in a state of electron deficiency, an electrolyte layer constituted of iodine and lithium iodide and having I⁻/I⁻₃ redox function is usually laminated, and this electrolyte layer injects electric charge to the dye side. The electric charge taken out from the anode electrode returns to the counter electrode (cathode electrode) through a circuit such as an electronic circuit, and from this counter electrode, electric charge is injected into the electrolyte layer. By the repetition of this procedure, light is converted into electricity.

Such an electrolyte layer in the dye-sensitized solar cell has a corrosive property, and particularly for the cathode electrode (side from which electric charge is released to the electrolyte layer), platinum or the like having corrosion resistance and having a high positive value as a standard electrode potential is used.

In order to enhance mobility of the oxidation-reduction pair, a developing solution such as a solvent is further used for the electrolyte layer. On this account, such a material having fluidity or volatility must be sealed, and this is said to be a very serious problem in the production of solar cells.

Therefore, it has been studied to use, as a substitute for platinum, a conductive polymer that is a p-type semiconductor in the counter electrode, or a means of using an ionic liquid for the oxidation-reduction layer, a means of solidification by a gelling agent, a means of using a solid layer system using copper iodide, etc. have been studied.

In usual, transparency (light-receiving property) is imparted to the conductive substrate by using a tin-based oxide, such as tin-doped indium oxide (ITO) or f luorine-doped tin oxide (FTO), as the conductive substrate. In order to prevent corrosion of them due to the electrolyte layer, it has been studied to provide a barrier layer. Moreover, in the case of large solar cells, electrodes of ITO, FTO or the like have high electrode resistance, and therefore, there is no satisfactory power collection effect. Consequently, wiring of power collection wires further becomes necessary.

By the way, in Japanese Patent Laid-Open Publication No. 223038/2005 (patent document 1), there is disclosed a photoelectric conversion element having a laminated structure in which a hole transport polymer electrolyte membrane is interposed between an n-type semiconductor electrode on the surface of which a dye is adsorbed and an electron conductive electrode, wherein the hole transport polymer electrolyte membrane contains a conjugated conductive polymer and a fibrous conductor.

In this patent document 1, the hole transport polymer electrolyte layer is obtained by adding a solution of ammonium persulfate and ferric sulfate to a mixed aqueous solution of pyrrole, polyisoprenesulfonic acid and sulfonated carbon nanotube to prepare a conductive polymer containing sulfonated carbon nanotube as a hole transport polymer electrolyte solution, concentrating the solution, adding acetonitrile to the concentrate to prepare a paste and applying the paste, or the hole transport polymer electrolyte layer is obtained by adding a solution of oxidation-reduction pair of tetrapropyl ammonium iodide and iodine in acetonitrile to the above hole transport polymer electrolyte solution to prepare a paste and applying the paste.

However, such a hole transport polymer electrolyte layer is formed by applying the paste containing a dispersing agent and drying the paste, and consequently, there is a fear of occurrence of blister, peeling or the like because of residual water or a volatile component. Moreover, the electrolyte layer is formed by dispersing oxidation-reduction pairs, and consequently, corrosion of an electrode takes place during the oxidation-reduction reaction.

On this account, it is necessary to use a material having high corrosion resistance such as platinum as a counter electrode material. Also as a transparent electrode on the anode side, FTO or the like is used, so that a vacuum deposition apparatus is required for the formation of the electrode, that is, in order to form the electrode, a large apparatus is required, and besides, rewiring of power collection wires accompanying increase of the size of the cell becomes necessary. Therefore, further improvement is desired.

Patent document 1: Japanese Patent Laid-Open Publication No. 223038/2005

ROHAN SENADEERA ET AL: Chem. Comm., 2005, 2259-2261, discloses a dye sensitized solar cell comprising a metal oxide working electrode, a PEDOT hole transporting layer and an ionic liquid electrolyte comprising EMImTf₂N and LiTf₂N.

US 2006/076051 A1 discloses dye sensitized solar cells with electrolyte compositions which include cationic polymers and halide ions and/or polyhalide ions as counter ions.

### DISCLOSURE OF THE INVENTION

### PROBLEM TO BE SOLVED BY THE INVENTION

It is an object of the present invention to provide a dye-sensitized solar cell having a novel constitution wherein the electrolyte layer is a solid-state layer according to claim 1.

It is another object of the present invention to provide a dye-sensitized solar cell having an electrolyte polymer layer which does not have a corrosive property to an electrode.

### MEANS TO SOLVE THE PROBLEM

The dye-sensitized solar cell of the present invention comprises a transparent substrate, a light-transmitting electrode, a metal oxide layer loaded with a dye, an electrolyte polymer layer, a counter electrode and a counter electrode substrate which are laminated in this order, and is **characterized in that** the electrolyte polymer layer is a solid-state layer containing a conductive polymer (A) doped with a doping agent and an ionic compound (B) mutually substitutable with a dopant ion species of the doping agent. Between the light-transmitting electrode and the metal oxide layer loaded with a dye, a buffer layer for short circuit prevention may be provided.

Differently from a dye-sensitized solar cell utilizing redox reaction using LiI/I₂ or the like, the dye-sensitized solar cell of the present invention is a dye-sensitized solar cell using a novel mechanism that an ionic compound (B) mutually substitutable with a dopant ion species of a doping agent doped in the conductive polymer (A) is added to the solid-state layer, and the dopant ion species are mutually substituted to transfer electric charges, whereby electromotive force is generated.

### EFFECT OF THE INVENTION

In the dye-sensitized solar cell of the present invention, the electrolyte polymer layer contains a conductive polymer doped with a dopant ion species and an ionic compound mutually substitutable with this dopant ion species, and by the combination of them, mutual electron delivery between the dopant ion species of the conductive polymer and the ionic compound is carried out, and thereby, electric charge transfer is carried out. Therefore, the electrolyte polymer layer becomes a solid-state layer containing no volatile component. Consequently, malfunction due to blister or peeling hardly takes place even by the use of the solar cell for a longperiodof time, anddeteriorationof the solar cell due to long-term use is hardly brought about.

Further, since the electrolyte polymer layer does not have a corrosive property to electrode and scarcely contains a liquid component, a mesh electrode formed from copper or the like can be used as the electrode. Furthermore, since no liquid component is contained and delivery of electrons is carried out by the dopant ion species and the counter ionic compound, an anode electrode composed of titanium oxide loaded with a metal complex such as ruthenium does not slip off, and hence, stable electric power can be supplied for a long period of time.

### BRIEF DESCRIPTION OF THE DRAWINGS

Fig. 1 is a view schematically showing one example of a section of the dye-sensitized solar cell of the present invention.
Fig. 2 is a view schematically showing one example of a section of the dye-sensitized solar cell of the present invention.

### Description of symbols

- 10:: transparent substrate
- 20:: light-transmitting electrode
- 30:: metal oxide layer loaded with dye
- 40:: electrolyte polymer layer
- 50:: counter electrode
- 60:: counter electrode substrate
- 70:: buffer layer for short circuit prevention

### BEST MODE FOR CARRYING OUT THE INVENTION

Next, the dye-sensitized solar cell of the invention is described in detail.

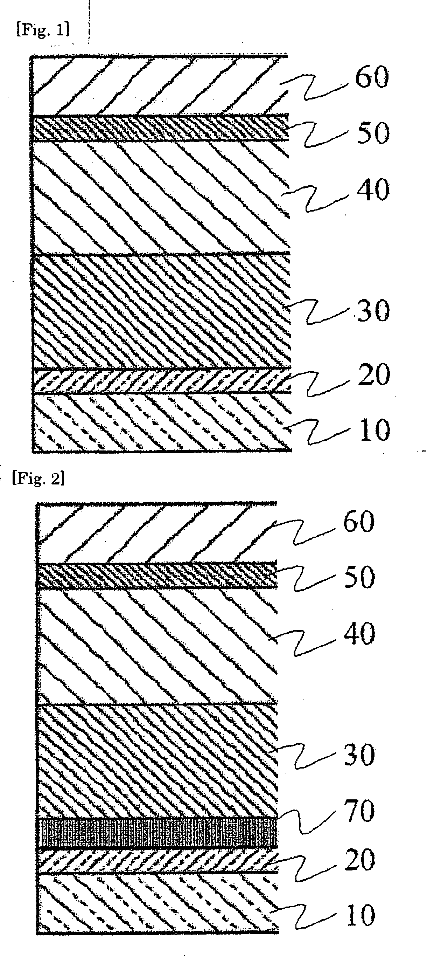

The dye-sensitized solar cell of the invention has a laminated structure wherein a transparent substrate, a light-transmitting electrode, a metal oxide layer loaded with a dye, an electrolyte polymer layer, a counter electrode and a counter electrode substrate are laminated in this order, as shown in Fig. 1. Further, a buffer layer for short circuit prevention may be laminated between the light-transmitting electrode and the metal oxide layer loaded with a dye, as shown in Fig. 2.

In the dye-sensitized solar cell of the invention, a film or a plate having a light transmittance of usually not less than 50%, preferably not less than 80%, can be used as the transparent substrate. Examples of such transparent substrates include inorganic transparent substrates, such as glass, and polymer transparent substrates, such as polyethylene terephthalate (PET), polycarbonate (PC), polyphenylene sulfide, polysulfone, polyester sulfone, polyalkyl (meth) acrylate, polyethylene naphthalate (PEN), polyether sulfone (PES) and polycycloolefin.

In the case of an inorganic transparent substrate, the thickness of the substrate is in the range of usually 2000 to 7000 µm and in the case of a polymer transparent substrate, the thickness of the substrate is in the range of usually 20 to 4000 µm, preferably 20 to 2000 µm. By the use of a polymer transparent substrate having such a thickness as above in the case of the polymer transparent substrate, flexibility can be imparted to the resulting dye-sensitized solar cell.

On one surface of such a transparent substrate, a light-transmitting electrode is arranged. As the light-transmitting electrode used herein, a mesh conductive metal electrode obtained by forming a conductive metal, such as tin oxide, ITO, FTO or copper, into a mesh can be mentioned. When the light-transmitting electrode is composed of tin oxide, ITO or FTO, the thickness of this light-transmitting electrode is in the range of usually 0.01 to 1 µm, preferably 0.01 to 0.5 µm.

The mesh conductive metal electrode obtained by forming a conductive metal such as copper into a mesh can be formed by etching a conductive metal, such as copper, nickel or aluminum, through for example photolithographic process so as to form a mesh having a line width of usually 10 to 70 µm, preferably 10 to 20 µm, and a pitch width of usually 50 to 300 µm, preferably 50 to 200 µm. In this case, the thickness of the conductor of the mesh conductive metal electrode becomes almost equal to the thickness of the conductive metal used, and is in the range of usually 8 to 150 µm, preferably 8 to 15 µm.

When the light-transmitting electrode is composed of tin oxide, ITO or FTO, this light-transmitting electrode composed of tin oxide, ITO or FTO can be formed on the surface of the transparent substrate by deposition, sputtering or the like. Or, the conductive metal electrode obtained by forming a conductive metal into a mesh is bonded to the surface of the transparent substrate with an adhesive or the like, whereby the light-transmitting electrode can be formed.

On the surface of such a light-transmitting electrode as above, a metal oxide layer loaded with a dye is formed. The metal oxide used herein is a metal oxide capable of forming an n-type semiconductor electrode, and examples of such metal oxides include titanium oxide, zinc oxide, tin oxide, iron oxide, tungsten oxide, zirconium oxide, hafnium oxide and tantalum oxide. These metal oxides may be used singly or in combination.

Particularly in the invention, it is preferable to use nano-titanum oxide or nano-zinc oxide having photocatalytic property. The mean primary particle diameter of such a metal oxide is in the range of usually 3 to 200 nm, preferably 7 to 30 nm. The metal oxide for use in the invention may be an aggregate of a metal oxide having such a mean primary particle diameter.

To such a metal oxide, a solvent that is inert to the metal oxide is added, to prepare a paste of the metal oxide. When nano-titanium oxide having photocatalytic property is used as the metal oxide, water, alcohols, a water-alcohol mixed solvent, etc. can be used as the solvents for preparing the paste. In order to facilitate dispersing, a dispersing agent such as paratoluenesulfonic acid can be also added in a small amount, and in order to enhance aggregation property, an oxidizing agent such as hydrogen peroxide can be also added in a small amount. In order to enhance aggregation property of the metal oxide, a binder such as titanium tetrachloride or tetraalkoxytitanium may be added in a small amount.

On the metal oxide, a precious metal can be supported. For example, in the grinding operation to prepare a paste of the nano-titanium oxide having photocatalytic property using a ball mill or the like, a precious metal such as a platinum colloid is added and then the mixture is subjected to ultrasonic dispersion, whereby platinum can be supported on the metal oxide. As the precious metal, silver nanocolloidal particles may be used. The amount of the precious metal supported is in the range of usually 0.1 to 10 parts by weight, preferably 0.5 to 5 parts by weight, based on 100 parts by weight of the metal oxide. The mean primary particle diameter of the precious metal supported is in the range of usually 4 to 100 nm.

The paste of the metal oxide prepared as above is applied to the surface of the light-transmitting electrode formed on the surface of the transparent substrate, or when the later-describedbuffer layer for short circuit prevention is provided, the paste is applied to the surface of the buffer layer. The coating thickness of the metal oxide paste is in the range of usually 0.5 to 100 µm, preferably 1 to 30 µm, in terms of dry thickness.

By heating the metal oxide paste thus applied and thereby removing the solvent, a metal oxide layer can be formed. It is preferable to set the temperature for heating to a temperature in the vicinity of a boiling point of the solvent used. In the case of using, for example, a water-ethanol mixed solvent, it is preferable that the paste is temporarily heated at a temperature in the vicinity of 80°C that is near the boiling point of ethanol and then heated at a temperature in the vicinity of 120°C that is a temperature of not lower than the boiling point of water.

In usual, the metal oxide layer cannot be fixed sufficiently by drying only, and therefore, when a glass substrate or the like is used as the transparent substrate, the substrate is further sintered at 400 to 500°C for about 30 minutes to 1 hour after drying.

The metal oxide layer thus formed is then loaded with a dye. Examples of the dyes used herein include metal complex dyes, such as ruthenium complex dye and other metal complex dyes, and organic dyes, such as methine dye, xanthene dye, porphyrin dye, merocyane dey, oligothiophene dye, phthalocyanine dye, azo-based dye and coumarine-based dye. These dyes can be used singly or in combination. In the present invention, it is particularly preferable to use a ruthenium complex dye represented by the following formula [1].

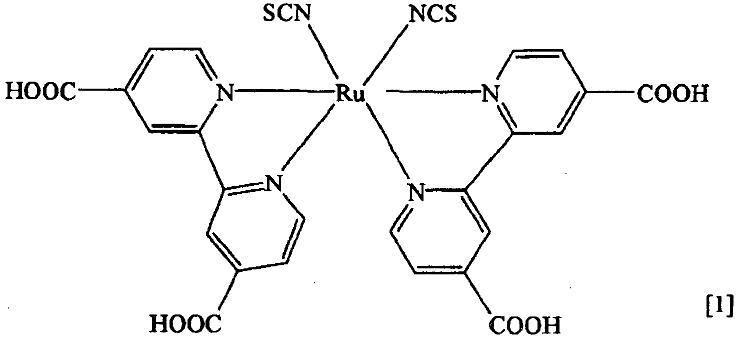

First, the dye is dissolved in a solvent capable of dissolving the dye, such as acetonitrile, to prepare a solution. The concentration of the dye solution is in the range of usually 0.01 to 0.1 mol dye/1000 ml solvent. In this dye solution, the substrate having the metal oxide layer formed as above is immersed for a given period of time, and then the substrate is taken out. Subsequently, the substrate with the metal oxide layer is cleaned with the same solvent as used for forming the dye solution to remove excess dye and then further dried to remove the solvent, whereby the metal oxide can be loaded with the dye.

The temperature for immersing the transparent substrate in the dye solution is in the range of usually 20 to 50°C, and at such a temperature, the substrate is immersed usually for 30 minutes to 24 hours. With regard to the amount of the dye loaded, such an amount that the whole surface of the metal oxide formed is coated with the dye of one molecule level is sufficient. On this account, a dye having a carboxyl group capable of undergoing chemical bonding to a hydroxyl group on the metal oxide surface is usually used. If sufficient chemical bonding is carried out on the surface, an excess dye component is removed from the surface by performing sufficient cleaning after the dye loading operation. Contrary to this, if this cleaning process is not performed sufficiently and if the metal oxide surface is loaded with dye molecules in piles, electric charge transfer takes place between the dye molecules, and the electric charge which should be naturally transferred to the n-type semiconductor is consumed between the dye molecules to markedly deteriorate efficiency.

When titanium oxide is used as the metal oxide in a dye-sensitized solar cell whose electrolyte polymer layer is a solid-state layer as in the present invention, the later-described conductive polymer comes into contact with the titanium oxide loaded with a dye or the light-transmitting layer which is not coated with the titanium oxide. On this account, before the excited electron moves from the dye to the titaniumoxide, then to the light-transmitting electrode and flows to the external circuit, the electron flows into the conductive polymer, and short circuit sometimes occurs inside the dye-sensitized solar cell.

Accordingly, in the case of the dye-sensitized solar cell of the invention (especially in the case where a conductive polymer having high solvent-solubility and high penetration property into the inside of nanoporous titanium oxide is used for the electrolyte polymer layer), it is preferable to provide a buffer layer for short circuit prevention between the light-transmitting electrode and the metal oxide layer loaded with a dye.

The buffer layer for short circuit prevention is not specifically restricted as long as it is a layer formed from a material having n-type semiconductor property and having transparency as a thin film (not more than 5000 nm). For example, a titanium oxide thin film formed by a sol-gel method, a thin film formed by using a dispersion of a metal oxide semiconductor other than titanium oxide, a conductive polymer film having n-type semiconductor property of polyalkylfluorenes, a low-molecular organic n-type semiconductor film such as bisnaphthyl oxadiazole, etc. can be mentioned. When nano-titanium oxide is used as a metal oxide of the metal oxide layer, it is preferable to use a nano-titanium oxide thin film having the same quality as that of the metal oxide layer in order to allow the work function to agree with that of the metal oxide.

In the case of using, for example, a sol-gel method, the titanium oxide thin filmcanbe formed by dissolving alkoxytitanium such as tetraisopropoxytitanium that is a precursor in an alcohol solvent, then adding, as a hydrolysis catalyst, a metal oxidizing agent, amine, protonic acid, titanium chloride or the like to the resulting solution to prepare a sol, applying the sol onto the light-transmitting electrode, drying the coating layer and heating it.

When a heat-resistant material such as glass is used for the transparent substrate, alkoxytitanium is applied alone onto the light-transmitting electrode without adding the hydrolysis catalyst, and the coating layer is dried and then heated to not lower than 350°C, whereby a titanium oxide thin film having satisfactory function of short circuit prevention can be formed.

The thickness of the buffer layer for short circuit prevention thus formed is in the range of usually 50 to 5000 nm, preferably 100 to 1000 nm.

Between the light-transmitting electrode and the metal oxide layer loaded with a dye, the buffer layer for short circuit prevention is provided as above when needed, then the anode electrode loaded with a dye is formed as previously described, and thereafter, an electrolyte polymer layer is formed on the anode electrode. In the present invention, this electrolyte polymer layer is in a solid state but not in a liquid state.

That is to say, in the present invention, the electrolyte polymer layer is a solid-state layer containing a conductive polymer (A) doped with a doping agent and an ionic compound (B) mutually substitutable with a dopant ion species of the doping agent.

Examples of the conductive polymers (A) usedherein include polyacetylene, polyparaphenylene, polyphenylene vinylene, polyphenylene sulfide, polypyrrole, polythiophene, poly(3-methylthiophene), polyaniline, polyperinaphthalene, polyacrylonitrile, polyoxadiazole and poly[Fe-phthalocyanine(tetrazine)]. These polymers can be used singly or in combination.

Particularly in the invention, it is preferable to use polyaniline (PANI), polyalkylpyrrole ("POPY" in the case where alkyl is octyl) or polythiophene as the conductive polymer (A). These polyaniline, polyalkylpyrrole and polythiophene may have substituents, such as alkyl group, carboxyl group, sulfonic acid group, alkoxyl group, hydroxyl group, ester group and cyano group.

As the doping agent doped in such a conductive polymer (A) as above, any compound is employable as long as it is an anionic compound. However, there can be generally mentioned acceptor type doping agents, e.g., sulfonic acid compounds, such as paratoluenesulfonic acid, bis-2-ethylhexylsulfosuccinic acid, aminobenzenesulfonic acid, polystyrenesulfonic acid and dodecylbenzenesulfonic acid; carboxylic acid compounds, such as formic acid, acetic acid, succinic acid and adipic acid; halogen compounds such as chlorine, iodine and bromine; Lewis acid compounds, such as fluoroboric acid and fluorophosphoric acid; phenol compounds, such as cresol and naphthanol; and acetyl compounds, such as acetophenone, acetylacetone and acetoacetic acid.

These doping agents can be used singly or in combination.

The doping quantity of such a doping agent as above to the conductive polymer (A) is in the range of usually 25 to 100 mol/mol%, preferably 40 to 80 mol/mol%, based on the number of moles of a monomer constituting the conductive polymer (A).

The dopant ion species doped in the conductive polymer (A) to constitute the electrolyte polymer layer is capable of mutual substitution with the ionic compound (B) present in the electrolyte polymer layer.

As the ionic compound (B) present in the electrolyte polymer layer, a Lewis acid salt (b-1-1), an alkali metal salt (b-1-2) or a metal chelate compound (b-1-3) can be mentioned.

As the ionic compound (B) present in the electrolyte polymer layer, specifically, a lithium halide, a lithium salt of Lewis acid, an ammonium salt of Lewis acid or the like is particularly preferable. Especially as the cation species, lithium having a low molecular weight and high mobility is particularly preferable, but solubility of the lithium salt compounds in the conductive polymer (A) is usuallynot so good, and therefore, in order to improve solubility, an ammonium salt of Lewis acid or the like is also used.

The Lewis acid or the halogen anion in the invention is capable of doping in the conductive polymer (A), and lithium or ammonium that is a cation species as the counter ion functions as a counter ion to the anionic dopant ion species dedoped from the conductive polymer (A).

On this account, oxidation-reduction pair such as I⁻/I⁻₃ that is a conventional oxidation-reduction component is not necessary in the invention, and by virtue of mutual charge delivery between the dopant ion species of the conductive polymer (A) and the ionic compound (B) added and oxidation-reduction property of the conductive polymer, the function as the electrolyte polymer layer can be maintained. Accordingly, even if an electrode composed of a conductive metal mesh obtained by forming a conductive metal such as copper into a mesh is used as a counter electrode, such a situation that the counter electrode composed of a conductive metal mesh does not function as an electrode because of corrosion by halogen does not occur.

In the dye-sensitized solar cell of the invention, further, a conductive polymer doped with a doping agent can be also used as the ionic compound (B) that is mutually substitutable with a dopant ion species doped in the conductive polymer (A). When the doped conductive polymer is used as the ionic compound (B), at least one polymer selected from a conductive polymer (b-2) having a doping ratio different from that of the conductive polymer (A), a conductive polymer (b-3) doped with a doping agent and having a polymer main chain different from that of the conductive polymer (A), andaconducive polymer (b-4) doped with a doping agent having an ion species different from the ion species doped in the conductive polymer (A) is used in order to carry out mutual charge delivery between such a conductive polymer and the conductive polymer (A).

When the conductive polymer (b-2) having a different doping ratio is used, it is preferable that the doping ratio of the conductive polymer (A) and the doping ratio of the conductive polymer (b-2) satisfy the following relation.

Doping ratio of conductive polymer (A)/doping ratio of conductive polymer (b-2)≥ 0.9

Since they satisfy such a relation, delivery of electrons between the doped conductive polymer (A) and the doped conductive polymer (b-2) is smoothly carried out, and the dye-sensitized solar cell can be efficiently driven.

Examples of the conductive polymers (b-2) used herein include polyacetylene, polyparaphenylene, polyphenylene vinylene, polyphenylene sulfide, polypyrrole, polythiophene, poly(3-methylthiophene), polyaniline, polyperinaphthalene, polyacrylonitrile, polyoxadiazole and poly[Fe-phthalocyanine(tetrazine)] which are enumerated in the description of the conductive polymer (A). These polymers can be used singly or in combination.

Particularly in the invention, it is preferable to use polyaniline (PANI), polyalkylpyrrole ("POPY" in the case where alkyl is octyl) or polythiophene as the conductive polymer (b-2). These polyaniline, polyalkylpyrrole and polythiophene may have substituents, such as alkyl group, carboxyl group, sulfonicacidgroup, alkoxyl group, hydroxyl group, ester group and cyano group. This conductive polymer (b-2) may be the same as or different from the conductive polymer (A).

Examples of the doping agents doped in the conductive polymer (b-2), which can be preferably used, include sulfonic acid compounds, such as paratoluenesulfonic acid, bis-2-ethylhexylsulfosuccinic acid, aminobenzenesulfonic acid, polystyrenesulfonic acid and dodecylbenzenesulfonic acid; carboxylic acid compounds, such as formic acid, acetic acid, succinic acid and adipic acid; halogen compounds such as chlorine, iodine and bromine; Lewis acid compounds, such as fluoroboric acid and fluorophosphoric acid; and phenol compounds, such as cresol and naphthanol, which are doping agents doped in the aforesaid conducive polymer (A).

When the conductive polymer (b-3) doped with a doping agent and having a polymer main chain different from that of the conductive polymer (A) isused, adifferenceinoxidation-reduction order occurs because of different main skeletons of the conductive polymers even if the same dopant ion species are used, and electric charge delivery through the media of the dopant ion species takes place.

When the conductive polymer (b-4) doped with a doping agent having an ion species different from the ion species doped in the conductive polymer (A) is used, electric charge delivery takes place between the conductive polymer (A) and the conductive polymer (b-4) that is the ionic compound (B) because different ion species are doped.

In the dye-sensitized solar cell of the invention, the thickness of the electrolyte polymer layer is in the range of usually 1 to 40 µm, preferably 5 to 20 µm.

Such an electrolyte polymer layer can be formed by preparing a solution in which a conductive polymer doped with a dopant ion species is dissolved or dispersed, adding an ionic compound for forming a counter ion compound to the solution, then applying the resulting solution and removing the solvent.

When the electrolyte polymer layer contains the conductive polymer (A) and the conductive polymer (b-2), (b-3) or (b-4), the electrolyte polymer layer can be formed by preparing solutions in which respective conductive polymers are dissolved or dispersed, mixing the solutions to prepare a mixed preparation solution and applying the solution to give a mixed layer, or can be formed by applying each of the solutions to form a layer containing the conductive polymer (A) and a layer containing the conductive polymer (b-2), (b-3) or (b-4). When the electrolyte polymer layer of a two-layer structure is formed as above, the thickness ratio ((A) / (b-2), (b-3) or (b-4)) is in the range of usually 50/1 to 1/50.

To the electrolyte polymer layer, other resins can be added. Other resins used herein are those for highly densely dispersing and fixing a polymer that is insoluble in a solvent. These resins do not need to have conduction property, and various resins are employable. Examples of such other resins include thermoplastic resins, such as polyalkyl (meth)acrylate, polyester, polystyrene, polether, polyurethane, polyimide and polyethylene. The amount of such other resins added is in the range of preferably 10 to 300 parts by weight, more preferably 20 to 100 parts by weight, based on 100 parts by weight of the conductive polymer for constituting the electrolyte polymer layer. Even if other resins are added in such an amount, transfer of electrons in the electrolyte polymer layer is not inhibited, and the electrolyte polymer layer of solvent-insoluble fine particles can be allowed to be in a highly densely and closely dispersed state.

On the surface of such an electrolyte polymer layer as above, a counter electrode is arranged. As the counter electrode, a platinum substrate or the like may be directly bonded, or an electrode wherein platinum is deposited on a surface of a conductive metal electrode obtained by forming tin oxide, FTO, ITO or a conductive metal into a mesh similarly to the aforesaid light-transmitting electrode can be used, or a conductive metal electrode obtained by forming tin oxide, FTO, ITO or a conductive metal into a mesh may be used as it is. That is to say, a barrier layer or the like is not particularly required.

When the counter electrode is composedof tin oxide, ITO or FTO, the thickness of this counter electrode is in the range of usually 0.01 to 1 µm, preferably 0.01 to 0.5 µm, and the mesh conductive metal electrode obtained by forming a conductive metal into a mesh can be formed by etching the conductive metal so as to form a mesh having a line width of usually 10 to 70 µm, preferably 20 to 50 µm, and a pitch width of usually 50 to 300 µm, preferably 50 to 200 µm. In this case, the thickness of the conductor of the mesh conductive metal electrode is in the range of usually 8 to 150 µm, preferably 20 to 75 µm

Particularly in the dye-sensitized solar cell of the invention, the electrolyte polymer layer is not liquid but a solid-state layer, and hence, occurrence of leakage of a liquid, occurrence of blister due to increase of temperature, etc. can be prevented. Further, a conductive metal electrode obtained by forming a conductive metal into a mesh can be used as each of the light-transmitting electrode and the counter electrode. In this case, therefore, the electrode canbe formed without using vacuum deposition technique, and production of the dye-sensitized solar cell becomes very easy.

After the counter electrode is formed as above, a counter electrode substrate is arranged outside the counter electrode. As the counter electrode substrate, an inorganic transparent substrate or a polymer transparent substrate given as an example of the aforesaid transparent electrode can be used. After the counter electrode is formed on a counter electrode substrate in advance, the counter electrode and the counter electrode substrate may be laminated on the surface of the electrolyte polymer layer in such a manner that the counter electrode comes into contact with the electrolyte polymer layer.

The dye-sensitized solar cell of the invention thus formed has a total thickness of usually 50 to 4000 µm, preferably 70 to 300 µm, and it is extremely thin and has flexibility.

When the dye-sensitized solar cell of the invention having such a constitution as above is irradiated with light from the transparent substrate side, the light transmitted by the transparent substrate and the light-transmitting electrode reaches the metal oxide layer loaded with a dye and excites the dye loaded on the layer, and electron injection into the metal oxide such as titanium oxide is carried out.

The electron transfer to the metal oxide such as titanium oxide from the dye that is used in the invention and thus excited is carried out extremely rapidly as compared with the reverse reaction, and hence, electric charge separation is effectively carried out. An electron injected into titanium oxide reaches a cathode electrode through an anode electrode and an external circuit. On the other hand, the dye which has donated electric charge to the metal oxide such as titanium oxide and is in an oxidized state receives an electron from the dopant ion species doped in the conductive polymer of the electrolyte polymer layer and rapidly returns to a neutral molecule. The dopant ion species which has delivered the electron of the electrolyte polymer layer is bonded to the counter ion, then moves inside the electrolyte polymer layer and receives an electron from the counter electrode. By repeating the above cycle, light is converted into electric current.

The dye-sensitized solar cell of the invention have high initial properties, and these properties are maintained for a long period of time and are hardly deteriorated. For example, the dye-sensitized solar cell of the invention in the initial stage has a current value of 1000 to 5000 µ/cm² and a voltage of 100 to 600 mV/cm², and after the accelerated aging test that the dye-sensitized solar cell is allowed to stand for 100 hours at 60°C and 90% RH, the dye-sensitized solar cell has a current value of 100 to 4000 µA/cm² and a voltage of 100 to 400 mV/cm². Thus, a decrease of electromotive force due to aging is not more than 20% based on the initial value, and the properties are extremely hardly deteriorated.

Further, in the dye-sensitized solar cell of the invention, the electrolyte polymer layer is a solid-state layer and scarcely contains water. Therefore, slip-off of a conductive metal layer such as a layer of titanium oxide for constituting an anode electrode hardly occurs, and the dye-sensitized solar cell of the invention can be driven over a long period of time.

Furthermore, in the electrolyte polymer layer, a conventional redox reaction using iodine and an iodine ion is not carried out, and delivery of electrons is carried out by means of a counter ion, so that there is no need to incorporate a halide such as iodine in excess into the electrolyte polymer layer. Hence, it is not particularly required to use a precious metal electrode such as a platinum electrode as the counter electrode which comes into contact with the electrolyte polymer layer, and for example, a mesh electrode formed from copper or the like can be used. Moreover, if a mesh electrode is used also as the light-transmitting electrode, the electrode can be formed without using vacuum deposition technique in the formation of an electrode, and besides, it also becomes unnecessary to use a precious metal such as platinum. Therefore, a dye-sensitized solar cell can be supplied inexpensively.

### EXAMPLES

The dye-sensitized solar cell of the present invention is further described with reference to the following examples,

### Synthesis Example 1

### Transparent substratehaving light-transmitting electrode laminated

(A-1) Transparent conductive substrate in which FTO is formed on a glass plate having a thickness of 2 mm and which has a surface resistance of 40 Ω/cm.
(A-2) Transparent conductive substrate in which ITO is formed on a PET film having a thickness of 80 µm and which has a surface resistance of 30 Ω/cm.
(A-3) Conductive substrate in which a copper mesh having a 200-mesh opening is laminated on a PET film having a thickness of 80 µm and the surface resistance on the copper mesh is 0.4 Ω/cm.
(A-4) The same transparent substrate as the transparent substrate (A-2) with ITO transparent electrode.

### Preparation of titanium oxide paste

(Ti-1) Using a ball mill, 10 g of photocatalytic nano-titanium oxide (available from Ishihara Sangyo Kaisha, Ltd., ST-21, mean primary particle diameter: 20 nm) and a solution containing 70 g of water, 20 g of methanol and 0.01 of paratoluenesulfonic acid were subjected to dispersing and mixing for 24 hours, to prepare a titanium oxide nano-paste.
(Ti-2Pt) To 100 g of the titanium oxide nano-paste prepared in the above (Ti-1), 0.5 g of a platinum colloid solution (available from Heraeus Co., PT97S007S) of 0.05 mol/liter was added, and with performing an ultrasonic dispersion operation for 40 minutes using an ultrasonic dispersing machine, platinum was supported on titanium oxide. Thus, a Pt-supported titanium oxide nano-paste was prepared.

### Preparation of anode electrode

(A-1-FTO-ST21) The transparent substrate (A-1) with FTO transparent electrode was cast coated with the titanium oxide nano-paste (Ti-1) prepared as above by a doctor blade method so that the thickness of the titanium oxide layer would become 20 µm, and then dried at 80°C for 2 minutes, followed by necking at 120°C for 10 minutes.
(A-2-ITO-ST21) The transparent substrate (A-2) with ITO transparent electrode was cast coated with the titanium oxide nano-paste (Ti-1) prepared as above by a doctor blade method so that the thickness of the titanium oxide layer would become 20 µm, and then dried at 80°C for 2 minutes, followed by necking at 120°C for 10 minutes.
(A-3-Cu-ST21) The transparent substrate (A-3) with copper mesh electrode having 200-mesh opening was cast coated with the titanium oxide nano-paste (Ti-1) prepared as above by a doctor blade method so that the thickness of the titanium oxide layer would become 20 µm, and then dried at 80°C for 2 minutes, followed by necking at 120°C for 10 minutes.
(A-4-ITO-ST21-Pt) The transparent substrate (A-4) with ITO transparent electrode was cast coated with the Pt-supported titanium oxide nano-paste (Ti-2Pt) prepared as above by a doctor blade method so that the thickness of the titanium oxide layer would become 20 µm, and then dried at 80°C for 2 minutes, followed by necking at 120°C for 10 minutes.

### Preparation of dye-fixed anode electrode

The anode electrodes (A-1-FTO-ST21), (A-2-ITO-ST21), (A-3-Cu-ST21) and (A-4-ITO-ST21-Pt) prepared as above were immersed in an acetonitrile solution of a ruthenium complex represented by the following formula [1] (available from Kojima Chemicals Co., Ltd.), said solution having a concentration of 0.05 mol/liter, for 2 hours at 40°C, and thereafter, the titanium oxide surfaces were cleaned with acetonitrile and dried at room temperature to prepare dye-fixed anode electrodes.

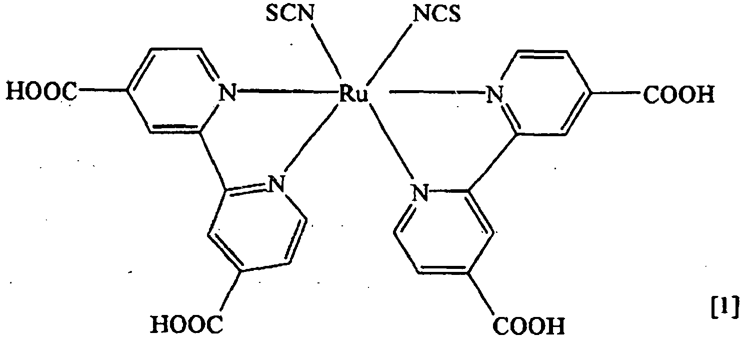

### Preparation of conductive polymer

### (C-1) Synthesis of polyaniline

To 100 ml of water, 4.7 g of an aniline monomer and 5.7 g of a 30% hydrochloric acid aqueous solution were added at room temperature, and they were stirred and mixed until the mixture became a homogeneous solution. Subsequently, to the solution was added 17.5 g of sodium dodecylbenzenesulfonate, and they were stirred and mixed until the mixture became more homogeneous.

Separately, a 30% ammonium persulfate aqueous solution adjusted to a liquid temperature of 5°C was prepared, and 14 g of this ammonium persulfate aqueous solution was added to the above aniline monomer solution over a period of 1 hour to perform polymerization for preparing polyaniline.

After addition of the whole amount of the ammonium persulfate aqueous solution was completed, reaction was further carried out at 5°C for 4 hours to complete polymerization reaction.

To 100 ml of the resulting dark green aqueous solution was added 200 ml of methanol to form a polyaniline aggregate, and this aggregate was filtered off.

Subsequently, polyaniline thus filtered off was dispersed again in 100 ml of water: acetone (volume ratio = 1:1) and then filtered off again. These operations were repeated to perform washing until the filtrate became completely colorless and transparent.

The thus obtained polyaniline was vacuum dried to obtain green polyaniline (C-1) in a doped state.

### Dedoping and redoping of polyaniline

With slowly adding 10 g of the thus obtained green polyaniline (C-1) in a doped state to 200 ml of a 5% sodium hydroxide aqueous solution, pulverization, dispersing and mixing were carried out for 2 hours using a homomixer to perform dedoping of a sulfuric acid dopant.

The aqueous solution under adjustment changed to dark green, and finally, a dispersion in which a polyaniline powder which had changed to extremely dark blue was dispersed in an aqueous solution was obtained. This dispersion proved to be a dispersion wherein the sulfuric acid dopant had been dedoped and polyaniline had been reduced.

After the alkali treatmentwas carriedout as above, filtration was carried out with purging the reaction system with a nitrogen gas. The filtration residue was further washed with 1000 ml of water five times and then vacuum dried to obtain reduced polyaniline.

In 100 ml of a mixed solution of methyl ethyl ketone (MEK) :N-methylpyrrolidone (NMP) (mixing volume ratio = 1:1), 1 g of the dried polyaniline was dissolved, and then 100 ml of a boron tetrafluoride MEK solution of 0.0108 mol/100 ml was added to obtain polyaniline (C-3) doped with boron tetrafluoride.

In 100 ml of methyl ethyl ketone (MEK) :N-methylpyrrolidone (NMP) (mixing volume ratio = 1:1), 1 g of vacuum dried and reduced aniline obtained in the process for preparing the polyaniline doped with boron tetrafluoride was dissolved, and then 50 ml of a boron tetrafluoride MEK solution of 0.0108 mol/100 ml was added to obtainpolyaniline (C-4) doped with boron tetrafluoride in a doping ratio of 50%.

### (C-2) Synthesis of polyoctylpyrrole

To 100 ml of water, 1.8 g of an octylpyrrole monomer and 1.6 g of a 30% hydrochloric acid aqueous solution were added at room temperature, and they were stirred and mixed until the mixture became homogeneous. Subsequently, to the solution was added 3.5 g of sodium dodecylbenzenesulfonate, and they were stirred and mixed until the mixture became more homogeneous.

Subsequently, with adjusting the liquid temperature to 0°C, 9.2 g of a 30% ammoniumpersulfate aqueous solution was added to the above octylpyrrole aqueous solution over a period of 2 hours to perform polymerization for preparing polyoctylpyrrole.

After the whole amount of the ammonium persulfate aqueous solution was added, the reaction system was maintained at a temperature of 10°C for 8 hours to complete polymerization.

To 100 ml of the resulting dark blue aqueous solution was added 200 ml of methanol to form a polyoctylpyrrole aggregate, and this aggregate was filtered off.

Subsequently, the polyoctylpyrrole thus filtered off was dispersed in 100 ml of water again and then filtered off again. These operations were repeated to perform washing until the filtrate became completely colorless and transparent.

The polyoctylpyrrole obtained through the above operations was vacuum dried to obtain black blue polyoctylpyrrole in a doped state.

### Preparation of conductive resin solution

### (B-1) Conductive resin solution containing binder resin

To 10 g of the polyaniline (C-1) in a doped state obtained as above, 90 g of MEK was added, and they were subjected to pulverization and dispersing for 24 hours by the use of a ball mill to prepare a homogeneous polyaniline dispersion. To the solution, 5 g of a polyisobutyl methacrylate resin having a molecular weight of 50,000 was added as a binder resin, and the resin was homogeneously dispersed to obtain a conductive resin solution (B-1).

The resulting conductive resin solution (B-1) was applied onto a PET plate so that the coating thickness would become 10 µm. The surface resistance of the coating film was measured, and as a result, it was 300 kΩ

### (B-2) Conductive polymer solution

In 95 g of a mixed solution of toluene/NMP/MEK (mixing volume ratio = 7/2/1), 5 g of the polyoctylpyrrole (C-2) in a doped state obtained as above was dissolved, to obtain a conductive polymer solution (B-2).

The resulting solution was applied onto a PET plate so that the coating thickness would become 10 µm. The surface resistance of the coating film was measured, and as a result, it was 500 kΩ.

### (B-3) Conductive polymer solution

In 98 g of a mixed solution of toluene/NMP/MEK (mixing volume ratio = 5/3/2), 2 g of the polyaniline (C-4) having a doping ratio of 50% obtained as above was dissolved, to obtain a conductive polymer solution (B-3).

The resulting solution was applied onto a PET plate so that the coating thickness would become 10 µm. The surface resistance of the coating film was measured, and as a result, it was 20 kΩ.

### Preparation of resin solution for anode electrode

### (D-1) Preparation of resin solution for anode electrode

10 g of the conductive polymer solution (B-1) which was a conductive resin solution containing a binder resin and had been prepared in the above "Preparation of conductive resin solution" and 0.5 g of LiI were mixed to prepare a resin solution (D-1) for anode electrode. In the resin solution (D-1) for anode electrode, the polyaniline (C-1) in a doped state, polyisobutyl methacrylate having a molecular weight of 50, 000 and a lithium ion as a counter ion compound were contained.

### (D-2) Preparation of resin solution for anode electrode

10 g of the conductive polymer solution (B-2) which contained polyoctylpyrrole (C-2) as a conductive polymer and had been prepared in the above "Preparation of conductive resin solution" and 0.3 g of LiPF₆ were mixed to prepare a resin solution (D-2) for anode electrode. In the resin solution (D-2) for anode electrode, the polyoctylopyrrole (C-2) in a doped state and a lithium ion as a counter ion compound were contained.

### (D-2-2) Preparation of resin solution for anode electrode

10 g of the conductive polymer solution (B-2) which was a conductive resin solution and had been prepared in the above "Preparation of conductive resin solution" and 0.7 g of TMEMA/BF₄ were mixed to prepare a resin solution (D-2-2) for anode electrode. In the resin solution (D-2-2) for anode electrode, the polyoctylopyrrole (C-2) in a doped state and N,N-dimethyl-N-methyl-N-(2-methoxyethyl)ammonium boron tetrafluoride (TMEMA) which was an ionic liquid were contained.

### (D-3) Preparation of resin solution for anode electrode

10 g of the conductive polymer solution (B-3) having a doping ratio of 50% which had been prepared in the above "Preparation of conductive resin solution" and 0.2 g of the polyaniline (C-3) doped with boron tetrafluoride which had been obtained in "Dedoping and redoping of polyaniline" were mixed to prepare a resin solution (D-3) for anode electrode. In the resin solution (D-3) for anode electrode, the polyaniline (C-3) doped with boron tetrafluoride in a doping ratio of 100% and the polyaniline (C-4) doped with boron tetrafluoride in a doping ratio of 50% were contained.

### (D-4) Preparation of resin solution for anode electrode

10 g of the conductive polymer solution (B-3) having a doping ratio of 50% which had been prepared in the above "Preparation of conductive resin solution" , 0.2 g of NH₄BF₄ and 0.2 g of the polyaniline (C-3) doped with boron tetrafluoride which had been obtained in "Dedoping and redoping of polyaniline" were mixed to prepare a resin solution (D-4) for anode electrode. In the resin solution (D-4) for anode electrode, the polyaniline (C-3) in a doped state and NH₄BF₄ which was Lewis acid were contained.

### (D-5) Preparation of resin solution for anode electrode

10 g of the conductive resin solution (B-1) which contained a binder resin and had been prepared in the above "Preparation of conductive resin solution" and 0.8 g of the polyaniline (C-3) doped with boron tetrafluoride which had been obtained in "Dedoping and redoping of polyaniline" were mixed to prepare a resin solution (D-5) for anode electrode. In the resin solution (D-5) for anode electrode, the polyaniline (C-1) in a doped state, the polyaniline (C-3) doped with boron tetrafluoride and a binder resin were contained.

### (D-6) Preparation of resin solution for anode electrode

10 g of the conductive resin solution (B-1) which contained a binder resin and had been prepared in the above "Preparation of conductive resin solution", 0.2 g of LiI and 0.4 g of the polyaniline (C-3) doped with boron tetrafluoride which had been obtained in "Dedoping and redoping of polyaniline" were mixed to prepare a resin solution (D-6) for anode electrode. In the resin solution (D-6) for anode electrode, the polyaniline (C-1) in a doped state, the polyaniline (C-3) doped with boron tetrafluoride, a lithium ion which was a counter ion compound and a binder resin were contained.

### (D-7) Preparation of resin solution for anode electrode

10 g of the conductive polymer solution (B-2) which contained polyoctylpyrrole and had been prepared in the above "Preparation of conductive resin solution" and 0.1 g of the polyaniline (C-1) in a doped state which had been obtained in "synthesis of polyaniline" were mixed to prepare a resin solution (D-7) for anode electrode. In the resin solution (D-7) for anode electrode, the polyoctylopyrrole (C-2) in a doped state and the polyaniline (C-1) in a doped state were contained.

### (D-8) Preparation of resin solution for anode electrode

10 g of the conductive resin solution (B-2) which contained polyoctylpyrrole and had been prepared in the above "Preparation of conductive resin solution", 0.1g of LiPF₆ and 0.1 g of the polyaniline (C-1) in a doped state which had been obtained in "synthesis of polyaniline" were mixed to prepare a resin solution (D-8) for anode electrode. In the resin solution (D-8) for anode electrode, the polyoctylopyrrole (C-2) in a doped state, a lithium ion which was a counter ion compound and the polyaniline (C-1) in a doped state were contained.

### (D-9) Preparation of resin solution for anode electrode

10 g of the conductive polymer solution (B-2) which contained polyoctylpyrrole and had been prepared in the above "Preparation of conductive resin solution", 0.7g of TMEMA/BF₄ and fullerene (PCBM) were mixed to prepare a resin solution (D-9) for anode electrode. In the resin solution (D-9) for anode electrode, the polyoctylopyrrole (C-2) in a doped state, N,N-dimethyl-N-methyl-N-(2-methoxyethyl)ammonium boron tetrafluoride which was an ionic liquid and PCBM were contained.

### (E-1) Preparation of resin solution for anode electrode

10 g of the conductive resin solution (B-1) which contained a binder resin and had been prepared in the above "Preparation of conductive resin solution", 0.5 g of LiI and 1.0 g of I₂ were mixed to prepare a resin solution (E-1) for anode electrode. In the resin solution (E-1) for anode electrode, the polyaniline (C-1) in a doped state, polyisobutyl methacrylate having a molecular weight of 50,000, and an iodine ion and iodine which were necessary for redox reaction by iodine were contained.

### (E-2) Preparation of resin solution for anode electrode

A resin solution (E-2) for anode electrode made of 10 g of the conductive polymer solution (B-2) containing polyoctylpyrrole (C-2) was used. In the resin solution (E-2) for anode electrode, the polyoctylpyrrole (C-2) in a doped state was contained, but a lithium ion which was a counter ion compound was not contained.

Compositions of the above resin solutions for anode electrode are set forth in Table 1.

**Table 1**

| Solvent No. | Conductive resin | Anions | Different type Cp | Additive |
|---|---|---|---|---|
| D-1 | B-1) 10g | LiI=0.5g | - | - |
| D-2 | B-2) 10g | LiPF₆=0.3g | - | - |
| D-2-2 | B-2) 10g | TMEMA/BF₄=0.7g | - | - |
| D-3 | B-3) 10g | - | C-3) 0.2g | - |
| D-4 | B-3) 10g | NH₄BF₄=0.2g | C-3) 0.2g | - |
| D-5 | B-1) 10g | - | C-3) 0.8g | - |
| D-6 | B-1) 10g | LiI=0.2g | C-3) 0.4g | - |
| D-7 | B-2) 10g | - | C-1) 0.1g | - |
| D-8 | B-2) 10g | LiPF₆=0.1g | C-1) 0.1g | - |
| D-9 | B-2) 10g | TMEMA/BF₄=0.7g | - | Fullerene PCBM |
| E-1 | B-1) 10g | LiI=0.5g | - | - |
| | | I₂=1.0g | | |
| E-2 | B-2) 10g | - | - | - |

| | | | | |
|---|---|---|---|---|
| Notes: Fullerene PCBM: Phenyl-C₆₁-butyric acid methyl ester TMEMA: N,N-dimethyl-N-methyl-N-(2-methoxyethyl)ammonium boron tetrafluoride | | | | |

### Example 1

On a surface of a light-transmitting electrode composed of ITO and to constitute the transparent substrate (A-2) with ITO transparent electrode described in the above "Transparent substrate having light-transmitting electrode laminated", the titanium oxide nano-paste (Ti-1) prepared in "Preparation of titanium oxide paste" was applied in accordance with the description of (A-2-ITO-ST21) of "Preparation of anode electrode", and the coating layer was dried to form an anode electrode on the surface of the transparent substrate.

This anode electrode was loaded with a ruthenium complex in accordance with the description of "Preparationof dye-fixed anode electrode" to give a titanium oxide layer loaded with a ruthenium complex.

On the surface of the anode electrode of the transparent substrate with light-transmitting electrode on which the ruthenium complex had been fixed as above, the resin solution (D-1) for anode electrode prepared in "Preparation of resin solution for anode electrode" was applied by spray coating so that the dry thickness would become 10 µm, and the coating layer was dried at 80°C for 2 minutes. The electrolyte polymer layer (also referred to as a "resin layer for anode electrode" hereinafter) thus formed was a solid-state layer substantially containing no liquid component.

Subsequently, the resulting laminated film was cut into a size of 1cm×1cm, and on the surface of the dried resin layer for anode electrode of the film, an open copper mesh electrode having a 200-mesh opening was placed, followed by pressure bonding at a linear pressure of 2 kg/cm. Thereafter, using an autoclave adjusted to 40°C, an operation to laminate the open copper mesh electrode on the resin layer for anode electrode was carried out at a pressure of 5 kg over aperiodof 30minutes to prepare a dye-sensitized solar cell element. On the surface of the open copper mesh electrode, a PET f ilmhaving a thickness of 80 µm was arranged as a counter electrode substrate.

The dye-sensitized solar cell element obtained as above was placed so that the anode surface could receive light, and a white fluorescent lamp was arranged so that the light-receiving surface of the solar cell element could be irradiated with light in a light quantity of 7000 Lx, followed by lighting. A current value and a voltage value taken out at the time of lighting were measured, and they were evaluated as initial properties.

The dye-sensitized solar cell element obtained as above was allowed to stand for 100 hours under the conditions of 60°C and 90% RH. Then, similarly to the above, the dye-sensitized solar cell element was placed so that the anode surface could receive light, and a white fluorescent lamp was arranged so that the light-receiving surface of the solar cell element could be irradiated with light in a light quantity of 7000 Lx, followed by lighting. A current value and a voltage value taken out at the time of lighting were measured, and they were evaluated as durability after aging. Further, appearance of the dye-sensitized solar cell element at this time was visually observed.

The layer constitution of the resulting dye-sensitized solar cell element is set forth in Table 2, and the properties thereof are set forth in Table 3.

### Example 2

On a surface of a light-transmitting electrode composed of a copper mesh and to constitute the transparent substrate (A-3) with copper mesh electrode described in the above "Transparent substrate having light-transmitting electrode laminated", the titanium oxide nano-paste (Ti-1) prepared in "Preparation of titanium oxide paste" was applied in accordance with the description of (A-3-Cu-ST21) of "Preparation of anode electrode", and the coating layer was dried to form an anode electrode on the surface of the transparent substrate.

This anode electrode was loaded with a ruthenium complex in accordance with the description of "Preparation of dye-fixed anode electrode" to give a titanium oxide layer loaded with a ruthenium complex.

On the surface of the anode electrode of the transparent substrate with light-transmitting electrode on which the ruthenium complex had been fixed as above, the resin solution (D-1) for anode prepared in "Preparation of resin solution for anode" was applied by spray coating so that the dry thickness would become 10 µm, and the coating layer was dried at 80°C for 2 minutes. The resin layer for anode electrode thus formed was a solid-state layer substantially containing no liquid component.

Subsequently, the resulting laminated film was cut into a size of 1cm×1cm, and on the surface of the dried resin layer for anode electrode of the film, an open copper mesh electrode having a 200-mesh opening was placed, followed by pressure bonding at a linear pressure of 2 kg/cm. Thereafter, using an autoclave adjusted to 40°C, an operation to laminate the open copper mesh electrode on the resin layer for anode electrode was carried out at apressureof 5 kg over a period of 30minutes to prepare a dye-sensitized solar cell element. On the surface of the open copper mesh electrode, a PET filmhavinga thickness of 80 µm was arrangedas a counter electrode substrate.

The dye-sensitized solar cell element obtained as above was placed so that the anode surface could receive light, and a white fluorescent lamp was arranged so that the light-receiving surface of the solar cell element could be irradiated with light in a light quantity of 7000 Lx, followed by lighting. A current value and a voltage value taken out at the time of lighting were measured, and they were evaluated as initial properties.

The dye-sensitized solar cell element obtained as above was allowed to stand for 100 hours under the conditions of 60°C and 90% RH. Then, similarly to the above, the dye-sensitized solar cell element was placed so that the anode surface could receive light, and a white fluorescent lamp was arranged so that the light-receiving surface of the solar cell element could be irradiated with light in a light quantity of 7000 Lx, followed by lighting. A current value and a voltage value taken out at the time of lighting were measured, and they were evaluated as durability after aging. Further, appearance of the dye-sensitized solar cell element at this time was visually observed.

The layer constitution of the resulting dye-sensitized solar cell element is set forth in Table 2, and the properties thereof are set forth in Table 3.

### Example 3

On a surface of a light-transmitting electrode composed of ITO and to constitute the transparent substrate (A-4) with ITO transparent electrode described in the above "Transparent substrate having light-transmitting electrode laminated", the Pt-supported titanium oxide nano-paste (Ti-2Pt) prepared in "Preparation of titanium oxide paste" was applied in accordance with the description of (A-4-ITO-ST21-Pt) of "Preparation of anode electrode" , and the coating layer was dried to form an anode electrode on the surface of the transparent substrate.

This anode electrode was loaded with a ruthenium complex in accordance with the description of "Preparationof dye-fixed anode electrode" to give a titanium oxide layer loaded with a ruthenium complex.

On the surface of the anode electrode of the transparent substrate with light-transmitting electrode on which the ruthenium complex had been fixed as above, the resin solution (D-1) for anode electrode prepared in "Preparation of resin solution for anode electrode" was applied by spray coating so that the dry thickness would become 10 µm, and the coating layer was dried at 80°C for 2 minutes. The resin layer for anode electrode thus formed was a solid-state layer substantially containing no liquid component.

Subsequently, the resulting laminated film was cut into a size of 1cm×1cm, and on the surface of the dried resin layer for anode electrode of the film, an open copper mesh electrode having a 200-mesh opening was placed, followed by pressure bonding at a linear pressure of 2 kg/cm. Thereafter, using an autoclave adjusted to 40°C, an operation to laminate the open copper mesh electrode on the resin layer for anode electrode was carried out at a pressure of 5 kg over a period of 30 minutes to prepare a dye-sensitized solar cell element. On the surface of the open copper mesh electrode, a PET f ilmhaving a thickness of 80 µm was arrangedas a counter electrode substrate.

The dye-sensitized solar cell element obtained as above was placed so that the anode surface could receive light, and a white fluorescent lamp was arranged so that the light-receiving surface of the solar cell element could be irradiated with light in a light quantity of 7000 Lx, followed by lighting. A current value and a voltage value taken out at the time of lighting were measured, and they were evaluated as initial properties.

The dye-sensitized solar cell element obtained as above was allowed to stand for 100 hours under the conditions of 60°C and 90% RH. Then, similarly to the above, the dye-sensitized solar cell element was placed so that the anode surface could receive light, and a white fluorescent lamp was arranged so that the light-receiving surface of the solar cell element could be irradiated with light in a light quantity of 7000 Lx, followed by lighting. A current value and a voltage value taken out at the time of lighting were measured, and they were evaluated as durability after aging. Further, appearance of the dye-sensitized solar cell element at this time was visually observed.

The layer constitution of the resulting dye-sensitized solar cell element is set forth in Table 2, and the properties thereof are set forth in Table 3.

### Example 4

On a surface of a light-transmitting electrode composed of ITO and to constitute the transparent substrate (A-1) with FTO transparent electrode described in the above "Transparent substrate having light-transmitting electrode laminated", the titanium oxide nano-paste (Ti-1) prepared in "Preparation of titanium oxide paste" was applied in accordance with the description of (A-1-ITO-ST21) of "Preparation of anode electrode", and the coating layer was dried to form an anode electrode on the surface of the transparent electrode.

This anode electrode was loaded with a ruthenium complex in accordance with the description of "Preparationof dye-fixed anode electrode" to give a titanium oxide layer loaded with a ruthenium complex.

On the surface of the anode electrode of the transparent substrate with light-transmitting electrode on which the ruthenium complex had been fixed as above, the resin solution (D-1) for anode electrode prepared in "Preparation of resin solution for anode electrode" was applied by spray coating so that the dry thickness would become 10 µm, and the coating layer was dried at 80°C for 2 minutes. The resin layer for anode electrode thus formed was a solid-state layer substantially containing no liquid component.

Subsequently, the resulting laminated film was cut into a size of 1cm×1cm, and on the surface of the dried resin layer for anode electrode of the film, an open copper mesh electrode having a 200-mesh opening was placed, followed by pressure bonding at a linear pressure of 2 kg/cm. Thereafter, using an autoclave adjusted to 40°C, an operation to laminate the open copper mesh electrode on the resin layer for anode electrode was carried out at apressureof 5 kg over a period of 30 minutes to prepare a dye-sensitized solar cell element. On the surface of the open copper mesh electrode, a PET film having a thickness of 80 µm was arranged as a counter electrode substrate.

The dye-sensitized solar cell element obtained as above was placed so that the anode surface could receive light, and a white fluorescent lamp was arranged so that the light-receiving surface of the solar cell element could be irradiated with light in a light quantity of 7000 Lx, followed by lighting. A current value and a voltage value taken out at the time of lighting were measured, and they were evaluated as initial properties.

The dye-sensitized solar cell element obtained as above was allowed to stand for 100 hours under the conditions of 60°C and 90% RH. Then, similarly to the above, the dye-sensitized solar cell element was placed so that the anode surface could receive light, and a white fluorescent lamp was arranged so that the light-receiving surface of the solar cell element could be irradiated with light in a light quantity of 7000 Lx, followed by lighting. A current value and a voltage value taken out at the time of lighting were measured, and they were evaluated as durability after aging. Further, appearance of the dye-sensitized solar cell element at this time was visually observed.

The layer constitution of the resulting dye-sensitized solar cell element is set forth in Table 2, and the properties thereof are set forth in Table 3.

### Comparative Example 1

On a surface of a light-transmitting electrode composed of ITO and to constitute the transparent substrate (A-2) with ITO transparent electrode described in the above "Transparent substrate having light-transmitting electrode laminated", the titanium oxide nano-paste (Ti-1) prepared in "Preparation of titanium oxide paste" was applied in accordance with the description of (A-2-ITO-ST21) of "Preparation of anode electrode", and the coating layer was dried to form an anode electrode on the surface of the transparent substrate.

This anode electrode was loaded with a ruthenium complex in accordance with the description of "Preparation of dye-fixed anode electrode" to give a titanium oxide layer loaded with a ruthenium complex.

On the surface of the anode electrode of the transparent substrate with light-transmitting electrode on which the ruthenium complex had been fixed as above, the resin solution (E-2) for anode electrode prepared in "Preparation of resin solution for anode electrode" was applied by spray coating so that the dry thickness would become 10 µm, and the coating layer was dried at 80°C for 2 minutes. The resin layer for anode electrode thus formed contained the polyoctylpyrrole (C-2) in a doped state but did not contain a counter ion.

Subsequently, the resulting laminated film was cut into a size of 1cm×1cm, and on the surface of the dried resin layer for anode electrode of the film, an open copper mesh electrode having a 200-mesh opening was placed, followed by pressure bonding at a linear pressure of 2 kg/cm. Thereafter, using an autoclave adjusted to 40°C, an operation to laminate the open copper mesh electrode on the resin layer for anode electrode was carried out at a pressure of 5 kg over aperiodof 30 minutes to prepare a dye-sensitized solar cell element. On the surface of the open copper mesh electrode, a PET filmhaving a thickness of 80 µm was arranged as a counter electrode substrate.

The dye-sensitized solar cell element obtained as above was placed so that the anode surface could receive light, and a white fluorescent lamp was arranged so that the light-receiving surface of the solar cell element could be irradiated with light in a light quantity of 7000 Lx, followed by lighting. A current value and a voltage value taken out at the time of lighting were measured, and they were evaluated as initial properties.

The dye-sensitized solar cell element obtained as above was allowed to stand for 100 hours under the conditions of 60°C and 90% RH. Then, similarly to the above, the dye-sensitized solar cell element was placed so that the anode surface could receive light, and a white fluorescent lamp was arranged so that the light-receiving surface of the solar cell element could be irradiated with light in a light quantity of 7000 Lx, followed by lighting. A current value and a voltage value taken out at the time of lighting were measured, and they were evaluated as durability after aging. Further, appearance of the dye-sensitized solar cell element at this time was visually observed.

The layer constitution of the resulting dye-sensitized solar cell element is set forth in Table 2, and the properties thereof are set forth in Table 3.

### Comparative Example 2

On a surface of a light-transmitting electrode composed of ITO and to constitute the transparent substrate (A-2) with ITO transparent electrode described in the above "Transparent substrate having light-transmitting electrode laminated", the titanium oxide nano-paste (Ti-1) prepared in "Preparation of titanium oxide paste" was applied in accordance with the description of (A-2-ITO-ST21) of "Preparation of anode electrode", and the coating layer was dried to form an anode electrode on the surface of the transparent substrate.

This anode electrode was loaded with a ruthenium complex in accordance wi th the description of "Preparation of dye-fixed anode electrode" to give a titanium oxide layer loaded with a ruthenium complex.

On the surface of the anode electrode of the transparent substrate with light-transmitting electrode on which the ruthenium complex had been fixed as above, the resin solution (E-1) for anode electrode prepared in "Preparation of resin solution for anode electrode" was applied by spray coating so that the dry thickness would become 10 µm, and the coating layer was dried at 80°C for 2 minutes. The resin layer for anode electrode thus formed was a liquid-containing layer containing LiI and I₂.

Subsequently, the resulting laminated film was cut into a size of 1cm×1cm, and on the surface of the dried resin layer for anode electrode of the film, an open copper mesh electrode having a 200-mesh opening was placed, followed by pressure bonding at a linear pressure of 2 kg/cm. Thereafter, using an autoclave adjusted to 40°C, an operation to laminate the open copper mesh electrode on the resin layer for anode electrode was carried out at a pressure of 5 kg over aperiodof 30 minutes to prepare a dye-sensitized solar cell element. On the surface of the open copper mesh electrode, a PET filmhaving a thickness of 80 µm was arranged as a counter electrode substrate.

The dye-sensitized solar cell element obtained as above was placed so that the anode surface could receive light, and a white fluorescent lamp was arranged so that the light-receiving surface of the solar cell element could be irradiated with light in a light quantity of 7000 Lx, followed by lighting. A current value and a voltage value taken out at the time of lighting were measured, and they were evaluated as initial properties.

The dye-sensitized solar cell element obtained as above was allowed to stand for 100 hours under the conditions of 60°C and 90% RH. Then, similarly to the above, the dye-sensitized solar cell element was placed so that the anode surface could receive light, and a white fluorescent lamp was arranged so that the light-receiving surface of the solar cell element could be irradiated with light in a light quantity of 7000 Lx, followed by lighting. A current value and a voltage value taken out at the time of lighting were measured, and they were evaluated as durability after aging. Further, appearance of the dye-sensitized solar cell element at this time was visually observed.

The layer constitution of the resulting dye-sensitized solar cell element is set forth in Table 2, and the properties thereof are set forth in Table 3.

**Table 2**

| | Anode electrode | | | | Electrolyte polymer layer | | | | | |
|---|---|---|---|---|---|---|---|---|---|---|
| | Electrode No. | Substrate | Semiconductor | Sensitizer | Solution No. | Polymer 1 | Dopant 1 | Amount of dopant | Additive compound | Plastic resin |
| Ex. 1 | A-2 | PET | titania | Ru | D-1 | PANI | SO₃ | 100% | LiI | acrylic |
| Ex. 2 | A-3 | PET | titania | Ru | D-1 | PANI | SO₃ | 100% | LiI | acrylic |
| Ex. 3 | A-4 | PET | titania/Pt | Ru | D-1 | PANI | SO₃ | 100% | LiI | acrylic |
| Ex. 4 | A-1 | PET | titania | Ru | D-1 | PANI | SO₃ | 100% | LiI | acrylic |
| Comp. Ex. 1 | A-2 | PET | titania | Ru | E-2 | POPY | SO₃ | 100% | none | none |
| Comp. Ex. 2 | A-2 | PET | titania | Ru | E-1 | PANI | SO₃ | 100% | LiI/I₂ | acrylic |

| | | | | | | | | | | |
|---|---|---|---|---|---|---|---|---|---|---|
| Notes: PANI denotes polyaniline. POPY denotes polyoctylpyrrole. | | | | | | | | | | |

**Table 3**

| | Initial properties | | Properties after aging | | |
|---|---|---|---|---|---|
| | Current | Voltage | Current | Voltage | Appearance |
| | µA/cm² | mV/cm² | µA/cm² | mV/cm² | |
| Ex. 1 | 1300 | 200 | 1000 | 170 | no change |
| Ex. 2 | 1600 | 180 | 1300 | 160 | no change |
| Ex. 3 | 2000 | 220 | 1900 | 200 | no change |
| Ex. 4 | 3600 | 240 | 2400 | 200 | no change |
| Comp. Ex. 1 | 120 | 15 | 100 | 12 | no change |
| Comp. Ex. 2 | 2000 | 170 | 20 | 2 | slip-off of titania surface |

As can be seen from the matters shown in Table 2 and Table 3, in the case of the conductive polymer alone, the oxidation-reduction ability was low and sufficient current value and voltage value were not obtained (see Comparative Example 1). In the case where a low-molecular redox agent such as LiI/I₂ was added, properties after durability test were markedly lowered, and slip-off of the titania surface took place. Further, the counter electrode formed from a copper mesh is dissolved by the iodine ion during the redox reaction using LiI/I₂, and therefore, the copper mesh electrode cannot be used as the counter electrode.

### Examples 5 to 13

Dye-sensitized solar cell elements were prepared in the same manner as in Example 1, except that the constitution of the anode electrode adopted in Example 1 was adoptedas itwas but the constitution of the electrolyte polymer layer was changed as described in Table 4. In Example 11 and Example 12, iodine was dissolved in a small amount of water andaddedto the electrolyte polymer layer as an additive compound, but the amount of water added was extremely slight, so that the electrolyte polymer layer could be present as a solid-state layer.

The constitutions of the electrolyte polymer layers are set forth in Table 4, and the properties of the dye-sensitized solar cell elements are set forth in Table 5.

**Table 4**

| | Electrolyte polymer layer | | | | | | | | | |
|---|---|---|---|---|---|---|---|---|---|---|
| | Solution No. | Polymer 1 | Dopant 1 | Amount of dopant | Additive compound | Polymer 2 | Dopant 2 | Amount of dopant | Other additives | Plastic resin |
| Ex. 5 | D-2 | POPY | SO₃ | 100% | LiPF₆ | - | - | - | - | - |
| Ex. 6 | D-3 | PANI | BF₄ | 50% | - | PANI | BF₄ | 100% | - | - |
| Ex. 7 | D-5 | PANI | SO₃ | 100% | - | PANI | BF₄ | 100% | - | acrylic |
| Ex. 8 | D-6 | PANI | SO₃ | 100% | LiI | PPNI | BF₄ | 100% | - | acrylic |
| Ex. 9 | D-7 | POPY | SO₃ | 100% | - | PANI | SO₃ | 100% | - | - |
| Ex. 10 | D-8 | PO PY | SO₃ | 100% | LiPF₆ | PANI | SO₃ | 100% | - | - |
| Ex. 11 | D-2-2 | POPY | SO₃ | 100% | I.Liq. | - | - | - | - | - |
| Ex. 12 | D-9 | POPY | SO₃ | 100% | I.liq. | - | - | - | PCBM | - |
| Ex. 13 | D-4 | PANI | BF₄ | 50% | NH₄BF₄ | PANI | BF₄ | 100% | - | - |

| | | | | | | | | | | |
|---|---|---|---|---|---|---|---|---|---|---|
| Notes: PANI denotes polyaniline. POPY denotes polyoctylpyrrole. | | | | | | | | | | |

**Table 5**

| | Initial properties | | Properties after aging | | |
|---|---|---|---|---|---|
| | Current | Voltage | Current | Voltage | Appearance |
| | µA/cm² | mV/cm² | µA/cm² | mV/cm² | |
| Ex. 5 | 3200 | 500 | 2800 | 420 | no change |
| Ex. 6 | 2000 | 280 | 1800 | 230 | no change |
| Ex. 7 | 2200 | 300 | 1900 | 260 | no change |
| Ex. 8 | 3000 | 280 | 2400 | 260 | no change |
| Ex. 9 | 2200 | 280 | 2000 | 240 | no change |
| Ex. 10 | 3000 | 340 | 2200 | 300 | no change |
| Ex. 11 | 4000 | 500 | 2900 | 450 | partial slip-off of titania |
| Ex. 12 | 4000 | 500 | 2700 | 480 | partial slip-off of titania |
| Ex. 13 | 2800 | 320 | 2200 | 300 | no remarks |

### Example 14

### Buffer solution A

1 g of tetraisopropoxytitanium was diluted with isopropyl alcohol in a dilution ratio of 20 times (weight ratio) to prepare a buffer solution A comprising a sol-gel liquid of titanium oxide.

### Transparent substrate (A-5) with buffer layer for short circuit prevention

On a surface of a light-transmitting electrode composed of FTO and to constitute the transparent substrate (A-1) with FTO transparent electrode, the above buffer solution A was applied by spin coating, and the coating layer was dried at 120°C for 5 minutes and then further heated at 400°C for 20 minutes to form a buffer layer for short circuit prevention on the light-transmitting electrode. The mean thickness of the buffer layer for short circuit prevention was 300 nm.

A dye-sensitized solar cell element was prepared in the same manner as in Example 4, except that instead of forming a titanium oxide layer on the light-transmitting electrode to constitute the transparent substrate (A-1) with FTO electrode, a titanium oxide layer was formed on the buffer layer for short circuit prevention by the use of the above-obtained transparent substrate (A-5) with buffer layer for short circuit prevention.

The dye-sensitized solar cell element obtained as above was placed so that the anode surface could receive light, and a white fluorescent lamp was arranged so that the light-receiving surface of the solar cell element could be irradiated with light in a light quantity of 7000 Lx, followed by lighting. A current value and a voltage value taken out at the time of lighting were measured, and they were evaluated as initial properties.

The dye-sensitized solar cell element obtained as above was allowed to stand for 100 hours under the conditions of 60°C and 90% RH. Then, similarly to the above, the dye-sensitized solar cell element was placed so that the anode surface could receive light, and a white fluorescent lamp was arranged so that the light-receiving surface of the solar cell could be irradiated with light in a light quantity of 7000 Lx, followed by lighting. A current value and a voltage value taken out at the time of lighting were measured, and they were evaluated as durability after aging. Further, appearance of the dye-sensitized solar cell element at this time was visually observed.

The properties of the resulting dye-sensitized solar cell element are set forth in Table 6.

### Example 15

### Buffer solution B

To a solution obtained by diluting 1 g of tetrabutoxytitanium with isopropyl alcohol in a dilution ratio of 20 times (weight ratio) was added 0.05 g of titanium tetrachloride, to prepare a buffer solution B comprising a sol-gel liquid of titanium oxide.

### Transparent substrate (A-6) with buffer layer for short circuit prevention

On a surface of a light-transmitting electrode composed of a copper mesh and to constitute the transparent substrate (A-3) with copper mesh electrode, the above buffer solution B was applied by spray coating, and the coating layer was dried at 120°C for 5 minutes. After the operations of application on the surface and drying were repeated three times, the coating layer was further heated at 120°C for 10 minutes to form a buffer layer for short circuit prevention on the light-transmitting electrode. The mean thickness of the buffer layer for short circuit prevention was 700 nm.

A dye-sensitized solar cell element was prepared in the same manner as in Example 2, except that instead of forming a titanium oxide layer on the light-transmitting electrode to constitute the transparent substrate (A-3) with copper mesh electrode, a titanium oxide layer is formed on the buffer layer for short circuit prevention by the use of the above-obtained transparent substrate (A-6) with buffer layer for short circuit prevention.

The dye-sensitized solar cell element obtained as above was placed so that the anode surface could receive light, and a white fluorescent lamp was arranged so that the light-receiving surface of the solar cell element could be irradiated with light in a light quantity of 7000 Lx, followed by lighting. A current value and a voltage value taken out at the time of lighting were measured, and they were evaluated as initial properties.

The dye-sensitized solar cell element obtained as above was allowed to stand for 100 hours under the conditions of 60°C and 90% RH. Then, similarly to the above, the dye-sensitized solar cell element was placed so that the anode surface could receive light, and a white fluorescent lamp was arranged so that the light-receiving surface of the solar cell element could be irradiated with light in a light quantity of 7000 Lx, followed by lighting. A current value and a voltage value taken out at the time of lighting were measured, and they were evaluated as durability after aging. Further, appearance of the dye-sensitized solar cell element at this time was visually observed.

The properties of the resulting dye-sensitized solar cell element are set forth in Table 6.

**Table 6**

| | Initial properties | | Properties after aging | | |
|---|---|---|---|---|---|
| | Current | Voltage | Current | Voltage | Appearance |
| | µA/cm² | mV/cm² | µA/cm² | mV/cm² | |
| Ex. 14 | 5400 | 410 | 5000 | 395 | no change |
| Ex. 15 | 2800 | 350 | 2500 | 320 | no change |

### INDUSTRIAL APPLICABILITY

According to the present invention, a dye-sensitized solar cell having stable electromotive force can be supplied inexpensively. In this dye-sensitized solar cell, the electrolyte polymer layer scarcely contains a liquid component. Therefore, even if the dye-sensitized solar cell is used for a long periodof time, blister, peeling or the like hardly occurs, and besides, slip-off of the titanium oxide layer loaded with a dye, which is an anode electrode, hardly occurs.

Moreover, a mesh electrode formed from copper or the like can be used as the electrode.

## Claims

1. A dye-sensitized solar cell comprising a transparent substrate, a light-transmitting electrode, a metal oxide layer loaded with a dye, an electrolyte polymer layer, a counter electrode and a counter electrode substrate which are laminated in this order,
**characterized in that** the electrolyte polymer layer is a solid-state layer containing a conductive polymer (A) and an ionic compound (B) wherein;
the conductive polymer (A) is doped with an ionic doping agent,
the anion of the ionic compound (B) is mutually interchangeable with the anion of the ionic doping agent; and
the doping agent is at least one acceptor type doping agent selected from the group consisting of a compound having a sulfonic acid group, a compound having an acetyl group, a compound having a carboxyl group, a compound having a boric acid group, and a compound having a phosphoric acid group.

2. The dye-sensitized solar cell as claimed in claim 1, wherein the conductive polymer (A) is at least one selected from the group consisting of polyacetylene, polyparaphenylene, polyphenylene vinylene, polyphenylene suifide, polypyrrole, polythiophene, poly(3-methylthiophene), polyaniline, polyperinaphthalene, polyacrylonitrile, polyoxadiazole and poly[Fe-phthalocyanine(tetrazine)].

3. The dye-sensitized solar cell as claimed in claim 1, wherein the ionic compound (B) contains a Lewis acid salt.

4. The dye-sensitized solar cell as claimed in claim 1, wherein the ionic compound (B) contains an alkali metal salt.

5. The dye-sensitized solar cell as claimed in claim 1, wherein the ionic compound (B) contains a metal chelate compound.

6. The dye-sensitized solar cell as claimed in claim 1, wherein the ionic compound (B) contains a conductive polymer (b) wherein the conductive polymer (b) is doped with a doping agent and satisfies the following relation:
Doping ratio of conductive polymer (A)/doping ratio of conductive polymer (b)≥0.9, and the doping ratios of the two polymers are different to one another.

7. The dye-sensitized solar cell as claimed in claim 1, wherein the ionic compound (B) contains a conductive polymer (b) wherein the conductive polymer (b) is doped with a doping agent and has a main chain skeleton different from that of the conductive polymer (A).

8. The dye-sensitized solar cell as claimed in claim 1, wherein the ionic compound (B) contains a conductive polymer (b) wherein the conductive polymer (b) is doped with a doping agent having an ion species different from the ion species doped in the conductive polymer (A).

9. The dye-sensitized solar cell as claimed in claim 1, wherein the conductive polymer (A) is at least one polymer selected from the group consisting of polyaniline, polypyrrole and polythiophene.

10. The dye-sensitized solar cell as claimed in claim 1, wherein the electrolyte polymer layer contains a thermoplastic resin in an amount of 10 to 300 parts by weight based on 100 parts by weight of the conductive polymer (A).

11. The dye-sensitized solar cell as claimed in claim 1 or 10, wherein the electrolyte polymer layer further contains a fullerene derivative.

12. The dye-sensitized solar cell as claimed in claim 1, wherein the transparent substrate and the counter electrode substrate are each at least one polymer transparent substrate selected from the group consisting of polyethylene terephthalate (PET), polyethylene naphthalate (PEN), polysulfone, polyether sulfone (PES) and polycycloolefin.

13. The dye-sensitized solar cell as claimed in claim 1, wherein a buffer layer for short circuit prevention is laminated between the light-transmitting electrode and the metal oxide layer loaded with a dye.

14. The dye-sensitized solar cell as claimed in claim 1, 12 or 13, wherein the light-transmitting electrode and/or the counter electrode is composed of a conductive metal having been formed into a mesh.

15. The dye-sensitized solar cell as claimed in claim 1, wherein the metal oxide layer is formed by fixing platinum and/or silver nanocolloidal particles to the metal oxide surface.

## Patentansprüche

1. Farbstoffsolarzelle, umfassend ein transparentes Substrat, eine lichtübertragende Elektrode, eine mit einem Farbstoff beladene Metalloxidschicht, eine Elektrolyt-Polymerschicht, eine Gegenelektrode und ein Gegenelektrodensubstrat, die in dieser Reihenfolge geschichtet sind,
**dadurch gekennzeichnet, dass** die Elektrolyt-Polymerschicht eine Feststoffschicht ist, die ein leitfähiges Polymer (A) und eine ionische Verbindung (B) enthält, wobei
das leitfähige Polymer (A) mit einem ionischen Dotiermittel dotiert ist,
die Verbindung (B) wechselseitig mit dem Anion des Dotiermittels austauschbar ist, und
das Dotiermittel wenigstens ein Dotiermittel des Akzeptortyps ist, ausgewählt aus der Gruppe bestehend aus einer Verbindung, die eine Sulfonsäuregruppe aufweist, einer Verbindung, die eine Acetylgruppe aufweist, einer Verbindung, die eine Carboxylgruppe aufweist, einer Verbindung, die eine Borsäuregruppe aufweist und einer Verbindung, die eine Phosphorsäuregruppe aufweist.

2. Farbstoffsolarzelle nach Anspruch 1, wobei das leitfähige Polymer (A) mindestens eines, ausgewählt aus der Gruppe bestehend aus Polyacetylen, Polyparaphenylen, Polyphenylenvinylen, Polyphenylensulfid, Polypyrrol, Polythiophen, Poly(3-methylthiophen), Polyanilin, Polyperinaphthalin, Polyacrylnitril, Polyoxadiazol und Poly[Fe-phthalocyanin(tetrazin)] ist.

3. Farbstoffsolarzelle nach Anspruch 1, wobei die ionische Verbindung (B) ein Salz einer Lewis-Säure enthält.

4. Farbstoffsolarzelle nach Anspruch 1, wobei die ionische Verbindung (B) ein Salz eines Alkalimetalls enthält.

5. Farbstoffsolarzelle nach Anspruch 1, wobei die ionische Verbindung (B) eine Metallchelatverbindung enthält.

6. Farbstoffsolarzelle nach Anspruch 1, wobei die ionische Verbindung (B) ein leitfähiges Polymer (b) enthält, wobei das leitfähige Polymer (b) mit einem Dotiermittel dotiert ist und das folgende Verhältnis erfüllt:
Dotierverhältnis des leitfähigen Polymers (A) / Dotierverhältnis des leitfähigen Polymers (b) ≥ 0,9, und die Dotierverhältnisse der beiden Polymere unterscheiden sich voneinander.

7. Farbstoffsolarzelle nach Anspruch 1, wobei die ionische Verbindung (B) ein leitfähiges Polymer (b) enthält, wobei das leitfähige Polymer (b) mit einem Dotiermittel dotiert ist und ein anderes Hauptkettenskelett als das leitfähige Polymer (A) aufweist.

8. Farbstoffsolarzelle nach Anspruch 1, wobei die ionische Verbindung (B) ein leitfähiges Polymer (b) enthält, wobei das leitfähige Polymer (b) mit einem Dotiermittel dotiert ist, das eine andere Ionenart aufweist als die in das leitfähigen Polymer (A) dotierte Ionenart.

9. Farbstoffsolarzelle nach Anspruch 1, wobei das leitfähige Polymer (A) wenigstens ein Polymer ist, das ausgewählt ist aus der Gruppe bestehend aus Polyanilin, Polypyrrol und Polythiophen.

10. Farbstoffsolarzelle nach Anspruch 1, wobei die Elektrolyt-Polymerschicht ein thermoplastisches Harz in einer Menge von 10 bis 300 Gew.-Teilen enthält, basierend auf 100 Gew.-Teilen des leitfähigen Polymers (A).

11. Farbstoffsolarzelle nach Anspruch 1 oder 10, wobei die Elektrolyt-Polymerschicht ferner ein Fullerenderivat enthält.

12. Farbstoffsolarzelle nach Anspruch 1, wobei das transparente Substrat und das Gegenelektrodensubstrat jeweils wenigstens ein transparentes Polymersubstrat sind, ausgewählt aus einer Gruppe bestehend aus Polyethylenterephthalat (PET), Polyethylennaphthalat (PEN), Polysulfon, Polyethersulfon (PES) und Polycycloolefin.

13. Farbstoffsolarzelle nach Anspruch 1, wobei zum Verhindern eines Kurzschlusses eine Pufferschicht zwischen die lichtübertragende Elektrode und die mit einem Farbstoff beladene Metalloxidschicht aufgebracht wird.

14. Farbstoffsolarzelle nach Anspruch 1, 12 oder 13, wobei die lichtübertragende Elektrode und/oder die Gegenelektrode aus einem leitfähigen Metall bestehen, das in ein Gitternetz geformt worden ist.

15. Farbstoffsolarzelle nach Anspruch 1, wobei die Metalloxidschicht gebildet wird, indem nanokolloidale Platin- und/oder Silberpartikel an der Metalloxidfläche fixiert werden.

## Revendications

1. Pile solaire sensibilisée par un colorant, comprenant un substrat transparent, une électrode phototransmettrice, une couche d'oxyde métallique chargée d'un colorant, une couche de polymère électrolytique, une contre-électrode et un substrat de contre-électrode qui sont laminés dans cet ordre,
**caractérisée en ce que** la couche de polymère électrolytique est une couche à semi-conducteurs contenant un polymère conducteur (A) et un composé ionique (B), dans laquelle :
- le polymère conducteur (A) est dopé avec un agent dopant ionique,
- l'anion du composé ionique (B) est mutuellement interchangeable avec l'anion de l'agent dopant ionique ; et
l'agent dopant est au moins un agent dopant de type accepteur choisi dans le groupe constitué d'un composé ayant un groupement acide sulfonique, un composé ayant un groupement acétyle, un composé ayant un groupement carboxyle, un composé ayant un groupement acide borique et un composé ayant un groupement acide phosphorique.

2. Pile solaire sensibilisée par un colorant selon la revendication 1, dans laquelle le polymère conducteur (A) est au moins un polymère choisi dans le groupe constitué du polyacétylène, du polyparaphénylène, du polyphénylènevinylène, du poly(sulfure de phénylène), du polypyrrole, du polythiophène, du poly(3-méthylthiophène), de la polyaniline, du polypérinaphtalène, du polyacrylonitrile, du polyoxadiazole et de la poly[phtalocyanine de fer (tétrazine)].

3. Pile solaire sensibilisée par un colorant selon la revendication 1, dans laquelle le composé ionique (B) contient un sel d'acide de Lewis.

4. Pile solaire sensibilisée par un colorant selon la revendication 1, dans laquelle le composé ionique (B) contient un sel de métal alcalin.

5. Pile solaire sensibilisée par un colorant selon la revendication 1, dans laquelle le composé ionique (B) contient un composé de chélate métallique.

6. Pile solaire sensibilisée par un colorant selon la revendication 1, dans laquelle le composé ionique (B) contient un polymère conducteur (b), dans laquelle le polymère conducteur (b) est dopé par un agent dopant et répond à la relation suivante :
rapport de dopage du polymère conducteur (A) / rapport de dopage du polymère conducteur (b) ≥ 0,9, et les rapports de dopage des deux polymères sont différents l'un de l'autre.

7. Pile solaire sensibilisée par un colorant selon la revendication 1, dans laquelle le composé ionique (B) contient un polymère conducteur (b), dans laquelle le polymère conducteur (b) est dopé par un agent dopant et a un squelette de chaîne principale différent de celui du polymère conducteur (A).

8. Pile solaire sensibilisée par un colorant selon la revendication 1, dans laquelle le composé ionique (B) contient un polymère conducteur (b), dans laquelle le polymère conducteur (b) est dopé par un agent dopant ayant une espèce ionique différente de l'espèce ionique dopée dans le polymère conducteur (A).

9. Pile solaire sensibilisée par un colorant selon la revendication 1, dans laquelle le polymère conducteur (A) est au moins un polymère choisi dans le groupe constitué de la polyaniline, du polypyrrole et du polythiophène.

10. Pile solaire sensibilisée par un colorant selon la revendication 1, dans laquelle la couche de polymère électrolytique contient une résine thermoplastique en quantité de 10 à 300 parties en poids sur la base de 100 parties en poids du polymère conducteur (A).

11. Pile solaire sensibilisée par un colorant selon la revendication 1 ou la revendication 10, dans laquelle la couche de polymère électrolytique contient en outre un dérivé de fullerène.

12. Pile solaire sensibilisée par un colorant selon la revendication 1, dans laquelle le substrat transparent et le substrat de contre-électrode constituent chacun au moins un substrat transparent de polymère choisi dans le groupe constitué du poly(téréphtalate d'éthylène) (PET), du poly(naphtalate d'éthylène) (PEN), d'une polysulfone, d'une polyéthersulfone (PES) et d'une polycyclooléfine.

13. Pile solaire sensibilisée par un colorant selon la revendication 1, dans laquelle une couche tampon pour prévenir les courts-circuits est laminée entre l'électrode phototransmettrice et la couche d'oxyde métallique chargée d'un colorant.

14. Pile solaire sensibilisée par un colorant selon la revendication 1, 12 ou 13, dans laquelle l'électrode phototransmettrice et/ou la contre-électrode est ou sont composées d'un métal conducteur qui se présente sous la forme d'un treillis.

15. Pile solaire sensibilisée par un colorant selon la revendication 1, dans laquelle la couche d'oxyde métallique est formée en fixant des particules nanocolloïdales de platine et/ou d'argent à la surface d'oxyde métallique.
